(19) Europäisches Patentamt / European Patent Office / Office européen des brevets

(11) **EP 3 290 244 A1**

(12) **EUROPEAN PATENT APPLICATION**
published in accordance with Art. 153(4) EPC

(43) Date of publication:
**07.03.2018 Bulletin 2018/10**

(51) Int Cl.:
**B60G 15/06** (2006.01)

(21) Application number: **16785821.6**

(22) Date of filing: **07.04.2016**

(86) International application number:
**PCT/CN2016/078637**

(87) International publication number:
**WO 2016/173390 (03.11.2016 Gazette 2016/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.04.2015 CN 201510206214**

(71) Applicant: **Xi, Yulin**
**Beijing 102206 (CN)**

(72) Inventor: **Xi, Yulin**
**Beijing 102206 (CN)**

(74) Representative: **Vitina, Maruta et al**
**Agency TRIA ROBIT**
**P.O. Box 22**
**1010 Riga (LV)**

(54) **COMBINED SPRING COMPENSATION SUSPENSION DEVICE**

(57)     A combined spring compensation suspension device for a vehicle, comprising a free spring (6), a compensation spring (3), a compensation spring pre-tightening device (2), a vibration isolation block (4), a light damping shock absorber (7) and a guide mechanism (5), wherein the free spring (6), the compensation spring (3) and the light damping shock absorber (7) are arranged between a frame (1) and the guide mechanism (5), the compensation spring (3) is connected to the frame (1) or the guide mechanism (5), the compensation spring pre-tightening device (2) is installed at the upper end of the compensation spring (3), and the guide mechanism (5) is used to connect a wheel to a vehicle body; and an elastic element on the vehicle suspension device is composed of the free spring (6) and the compensation spring (3), a suspension load has a compensation interval nearby a static deflection stroke of the suspension, when the suspension load is changed in the compensation interval, the stroke is not changed or is slightly changed, only when the suspension load exceeds the compensation interval, the suspension stroke can be changed, and the controllability and the comfort of the vehicle adopting the design can be simultaneously improved.

FIG. 1

## Description

## TECHNICAL FIELD

The present invention relates to a suspension device for a vehicle, comprising a free spring, a compensation spring, a pre-tightening device, a light damping shock absorber and a guide mechanism. A load compensation function is designed nearby a static deflection of the vehicle in the present invention, the unnecessary stroke variation of the vehicle suspension device can be effectively reduced, and the comfort and the controllability of the vehicle can be improved.

## BACKGROUND

A general vehicle may be impacted by a pavement or rail during normal running. If these impacts are directly transferred to a vehicle body or a vehicle structure through a wheel and a suspension device, the vehicle body and components may be damaged and comfort of passengers is affected. Therefore, the general vehicle is equipped with an elastic suspension system to alleviate the impact from the wheel. However, elasticity of the suspension may cause vibration of the vehicle body or the vehicle structure. Since the impact or the change of a vehicle moving state may cause change of a suspension load and also cause pitching, side tilting and vibration of the vehicle body and the change of a wheel posture, stability and controllability of the vehicle are reduced.

It is well known that for a vehicle designed by a current technology, a suspension device is composed of an elastic element, a guide mechanism, a shock absorber and a transverse stabilization rod. The elastic element is mainly used for bearing and transferring a vertical load and relieving the impact on the vehicle body due to pavement irregularity. Springs are the most important part in the elastic element, and include a leaf spring, a helical spring, a torsion-bar spring, a hydro-pneumatic spring, an inflating spring, a rubber spring and other types. The shock absorber is used for attenuating the vibration caused by an elastic system. The shock absorber comprises a cylindrical shock absorber, a resistance adjustable shock absorber and an inflating shock absorber. The guide device is used for transferring force and moment of force between the wheel and the vehicle body and also keeping the wheel to jump relative to the vehicle body according to a certain movement track, and is generally composed of a control swing arm type rod. Types of the guide mechanism include a single rod type or a multi-connecting-rod type. When the leaf spring is used as the elastic element, the guide mechanism may not be additionally installed since the leaf spring performs a guide effect. On some cars and buses, to prevent the vehicle body from generating excessive transverse tilting during turning and other conditions, the transverse stabilization rod is added in the suspension system for the purposes of enhancing transverse stiffness, enabling the vehicle to have an understeering characteristic and improving control stability and running smoothness of the vehicle.

The elastic element and a shock absorbing element of the suspension designed by the current technology have two main performance requirements: riding comfort and control stability. The suspension of the general vehicle mainly influences vertical vibration of the vehicle. A traditional suspension is nonadjustable, and the change of the height of the vehicle body during running depends on deformation of the spring. Therefore, such a phenomenon naturally exists: when the vehicle is at idle load and at load, ground clearances of the vehicle body are different. Especially, some cars adopt soft helical springs and deformation strokes of the springs after loading are large, causing that the ground clearances of the vehicle at idle load and at load have a difference of tens of millimeters, thereby influencing trafficability of the vehicle. Meanwhile, the vehicle has different requirements for the suspension in different running states. In general running, a soft suspension is needed for acquiring comfort. During sharp turning and braking, a hard suspension is needed for acquiring stability. The two main performance requirements have confliction and contradiction. Since a generally used passive suspension has fixed suspension stiffness and damping coefficient, requirements of riding comfort and control stability cannot be simultaneously satisfied.

To solve the contradiction between riding comfort and control stability, an electric control suspension technology is generated. Currently known control forms of an electric control suspension mainly include two forms: a hydraulic control form and a pneumatic control form. The hydraulic control form of the electric control suspension is a relatively advanced form. An active suspension belongs to the hydraulic control form. In the hydraulic control form, an active mode is adopted to inhibit impact force of the pavement on the vehicle body and inclined force of the vehicle body. The pneumatic control form of the electric control suspension is also called as a self-adaptive suspension, and deals with the change of the pavement through adjustment within a certain range. The active suspension or the self-adaptive suspension has an electronic control unit (ECU), and thus certainly has a sensor. The sensor is an important component on the electric control suspension. Once the sensor fails, the operation of the entire suspension system is abnormal. All of these inevitably generate defects of complicated structure, high technical requirement, expensive cost, large power consumption and the like in an existing electric control suspension system, thereby limiting wide application of the high-performance suspension in the vehicle.

A known patent closest to the present invention is "Vehicle Wheel Suspension Device for Modifying Stiffness Curve Using Spring with Flexible Armoring " (CN97181615.8). The vehicle wheel suspension involved in the present invention uses a helical spring and a flexible retaining and connecting armoring, which in working position, stresses a portion of the spring by maintaining the spring compressed, to obtain two different stiffness curves of which the inflection point is adjacent the working position; upon a compression, the entire helical spring is compressed and, upon expansion, only the unstressed portion of the spring is uncompressed. Therefore, the suspension is asymmetric with expansion stiffness greater than compression stiffness. On one hand, each armoring comprises two fixing elements. One fixing element is matched with all or a portion of a spring coil of the helical spring, and the other fixing element is matched with all or a portion of another spring coil of the spring, or with a housing of a shock absorber. On the other hand, each armoring comprises a longitudinal element deformable in compression and indeformable in expansion and connected with the two fixing elements. The armoring limits and compresses at least two spring coils of the helical spring. However, the present invention is only limited to changing the stiffness of the spring within a small range, and still can improve the running performance of the vehicle without needing a transverse stabilization rod. But the change of the stiffness is limited if the suspension is added in the same spring. Meanwhile, contents for reducing damping of the shock absorber are not involved, and controllability and comfort of the suspension cannot be improved fundamentally.

**SUMMARY**

A main purpose of the present invention is to provide a combined spring compensation suspension device. When a vehicle normally runs and accelerates, decelerates or turns within a safety range, a suspension system enables the vehicle to effectively control side tilting, pitching, swaying, jumping and vehicle body height, so that an impact from ground or imbalance generated by a vehicle body can be effectively absorbed by a suspension and adhesive force of wheels to the ground is kept to the largest degree, so as to fully perform driving and braking effects of the wheels, thereby greatly enhancing stability of the vehicle during high-speed running and turning. In addition, when the carrying capacity of the vehicle is changed, the vehicle can always keep a certain vehicle body height. Therefore, a geometrical relationship of the suspension can be ensured not to change. Thus, the vehicle body always keeps a required parallel state with a pavement or a rail plane, thereby achieving or exceeding use efficacy of an active suspension widely used currently.

The above purpose is realized through combination and load compensation of elastic elements, i.e., springs, of the suspension system. In the present invention, a suspension stroke when the vehicle is loaded and at static balance in a horizontal plane is taken as static deflection; a suspension load when the vehicle is at idle load and static in the plane is taken as idle load $G_0$; a suspension load when the vehicle is loaded and is static in the plane is taken as G; and a suspension stroke at largest compression is taken as dynamic deflection. Through combination design of different springs, when the suspension load is changed within a certain range nearby the static deflection of the suspension, the suspension stroke is not changed or slightly changed. A load range when the suspension stroke is not changed is called as a compensation interval (a minimum value is set as A, a maximum value is set as B, and $A < G_0 < G < B$). When the suspension load is changed within the compensation interval, the suspension stroke is not changed or slightly changed; and when the suspension load exceeds the compensation interval, the suspension stroke is changed.

An elastic element of the suspension in the present invention is formed by combining a free spring and a compensation spring. When the suspension stroke of the vehicle is greater than static deflection, the free spring provides elastic support force; and when the suspension stroke of the vehicle is changed between static deflection and dynamic deflection, the compensation spring and the free spring jointly provide the elastic support force or the compensation spring individually provides the elastic support force. A most important feature of the technology is that a maximum stroke of the compensation spring is limited by a pre-tightening device and the compensation spring is operated only within a range from static deflection to dynamic deflection of the suspension.

The above design method can enable the elastic element of the suspension system to have an ideal stiffness characteristic with respect to some vehicles with small load change: the elastic element has an automatic load compensation function nearby the static deflection of the suspension; on one hand, when the suspension load is changed within the range of the compensation interval, although the suspension load is changed, i.e., increased or decreased, the length of the compensation spring of the suspension is not changed under the effect of the pre-tightening device; and on the other hand, when the suspension load exceeds the range of the compensation interval, i.e., when the suspension load is less than A, the length of the free spring is changed and the length of the compensation spring is not changed, and when the suspension load is greater than B, the lengths of the free spring and the compensation spring are simultaneously changed. Namely, the suspension stroke is not changed or slightly changed from an idle load to a load because the pre-tightening force of the compensation spring enables the elastic element of the suspension to have the automatic load compensation function in this stroke. Nearby the static deflection of the suspension, the stiffness of the elastic element of the entire suspension becomes very large, and greatly exceeds the stiffness of the spring, so that the vehicle has good controllability. Meanwhile, when the suspension stroke leaves the static deflection, the free spring and the compensation spring restore original stiffness; and the suspension stroke is still correspondingly changed with the change of the load to keep riding comfort of the vehicle.

A general vehicle has four or more suspension devices. When a wheel connected with one suspension device is impacted by ground or rail, a load on the suspension may exceed the compensation interval of the suspension load, and the suspension stroke is changed. The load of the suspension device on the vehicle body is also changed, and is transferred to connecting parts of other suspension devices through the vehicle body. At this moment, other suspension devices are operated at the compensation interval nearby the static deflection. If the change of the borne load is less than a load range of the compensation interval, then the changed load is compensated, and the stroke of the influenced suspension is not changed or slightly changed, so that the entire vehicle body can keep fixed. If the load exceeds the load range of the compensation interval, the stroke of the suspension device is changed. However, since the compensation interval of the load exists, the stroke of the suspension device may generate a trend of returning to a static deflection stroke, and then quickly returns nearby the static deflection, so that the controllability of the vehicle may quickly restore to an optimal state.

The suspension adopting this design simultaneously has two effects. Firstly, the suspension has good geometric deformation capability. Since the elastic element has small stiffness in a main stroke, although a small part in the middle has large stiffness, the range can be reduced to a range of parameters allowed by comfort of the vehicle through design. When an impact exceeds the range, the elastic element of the suspension can generate needed deformation, while the change of the elastic support force caused by the deformation is absorbed by other suspensions in a high-stiffhess operation mode, thereby minimizing an influence on the vehicle body. Secondly, the elastic element of the suspension has a trend of automatically operating in a high-stiffness interval. Under the influence of the trend, the suspension is operated in the high-stiffness state in most of time. At this moment, due to the effect of high stiffness, side tilting, pitching, load change and the like of the vehicle body can be effectively absorbed by the high-stiffness suspension, and good balance can be kept even without transverse and longitudinal stabilization rods. In an ordinary driving state, the vehicle does not generate obvious phenomena of side tilting during turning, stalling during braking and backward leaning during acceleration. These are difficult to realize in a top-level technology of current suspension technologies. Meanwhile, since the suspension realizes an ideal characteristic by means of the effect of the compensation spring in the elastic element, the vibration of the vehicle body is reduced and the posture retention effect of the shock absorber in the suspension for the vehicle body is weakened. The light damping shock absorber can be adopted to effectively reduce cost, and has a key role in simplifying the structure of the shock absorber in the suspension and reducing the cost of the suspension.

The present invention is realized as follows:

A combined spring compensation suspension device comprises a free spring (6), a compensation spring (3), a compensation spring pre-tightening device (2), a light damping shock absorber (7) and a guide mechanism (5); wherein the free spring (6), the compensation spring (3) and the light damping shock absorber (7) are arranged between a vehicle frame (1) and the guide mechanism (5); the compensation spring (3) is connected with the vehicle frame (1) or the guide mechanism (5); the compensation spring pre-tightening device (2) is installed at one end of the compensation spring (3); and the guide mechanism (5) is used for connecting a wheel and a vehicle body and providing positioning installation for the free spring (6), the compensation spring (3) and the light damping shock absorber (7).

An upper end of the free spring (6) is connected with the vehicle frame (1), and a lower end is connected with the guide mechanism (5); an upper end of the light damping shock absorber (7) is connected with the vehicle frame (1), and a lower end is connected with the guide mechanism (5); an upper end of the compensation spring (3) is connected with the vehicle frame (1), or a lower end is fixedly connected with the guide mechanism (5); the compensation spring pre-tightening device (2) is installed at the connecting end; a vibration isolation block (4) is installed on the compensation spring (3) away from the connecting end; and the light damping shock absorber (7), the free spring (6) and the compensation spring (3) form parallel connection installation between the vehicle frame (1) and the guide mechanism (5).

A lower end of the free spring (6) is connected with the guide mechanism (5), and an upper end is connected with a lower end of the light damping shock absorber (7); a guide cylinder (11) is connected to a lower end of an outer wall of the light damping shock absorber (7); a lower end of the compensation spring (3) is connected with an upper end of the light damping shock absorber (7); an upper end of the compensation spring (3) is connected with the vehicle frame (1); the compensation spring pre-tightening device (2) is installed at the connecting end; and the compensation spring (3), the light damping shock absorber (7) and the free spring (6) are successively connected between the vehicle frame (1) and the guide mechanism (5) to form series connection installation.. In the installation form, inverted installation can also be adopted. An upper end of the free spring (6) is connected with the vehicle frame (1), and a lower end is connected with an upper end of the light damping shock absorber (7); a guide cylinder (11) is connected to an upper end of the outer wall of the light damping shock absorber (7); an upper end of the compensation spring (3) is connected with a lower end of the light damping shock absorber; a lower end of the compensation spring (3) is connected with the guide mechanism (5); the compensation spring pre-tightening device (2) is installed at the connecting end; and the free spring (6), the light damping shock absorber (7) and the compensation spring (3) are successively connected between the vehicle frame (1) and the guide mechanism (5) to form series connection installation.

A central lower end of the free spring (6) is connected with the guide mechanism (5), and upper ends on both sides are connected with the vehicle frame (1); the upper end of the compensation spring (3) is connected with the vehicle frame (1); a vibration isolation block (4) is installed at the lower end of compensation spring (3); and the vibration isolation block (4) and the free spring (6) are arranged to be centered.

When the free spring (6) and the compensation spring (3) are installed in parallel, a suspension load when a vehicle is at idle load is $G_0$; a suspension load when the vehicle is loaded is G; pre-tightening force F of the compensation spring (3) forming the suspension is greater than $G-G_0$; and when the free spring (6) is nearby a static deflection value of the vehicle, elastic support force f provided for the vehicle is less than $G_0$. To increase controllability of the vehicle, during design, when pre-tightening force F of the compensation spring forming the suspension is greater than $1.1(G-G_0)$ and a helical free spring is nearby a static deflection value of the vehicle, elastic support force f provided for the vehicle is less than or equal to $0.9G_0$. If a vehicle with strong controllability is needed, a large multiple can be designed. For example, for a race car, $F \geq 2(G-G_0)$ and $f \leq 0.5G_0$.

When the free spring (6) and the compensation spring (3) are installed in series, a suspension load when the vehicle is at idle load is $G_0$; a suspension load when the vehicle is loaded is G; pre-tightening force F of the compensation spring (3) forming the suspension is greater than G; and when the free spring (6) is nearby a static deflection value of the vehicle, elastic support force provided for the vehicle satisfies: $f < G_0$.

When pre-tightening force F of the compensation spring (3) forming the suspension is greater than $1.1(G-G_0)$ and the free spring (6) is nearby a static deflection value of the vehicle, elastic support force f provided for the vehicle is less than $0.9G_0$. The suspension is generally used for vehicles with long suspension strokes, such as motorcycles, is rarely applied to race cars and certainly can be designed according to a parallel connection multiple.

Of course, to increase comfort of the vehicle, a size of a range of a compensation interval can be adjusted at any time according to a load size and an operation requirement, which can be specifically realized by dynamically adjusting the pre-tightening force of the compensation spring through an adjusting device. A general adjusting device has an electronic automatic adjustment or manual adjustment mode.

Pre-tightening force F of the compensation spring (3) forming the suspension is greater than 1.1G; and when the free spring (6) is nearby a static deflection value of the vehicle, elastic support force f provided for the vehicle is less than $0.9G_0$.

A damping coefficient of the light damping shock absorber is less than 0.25 in an extension stroke, and is less than 0.15 in a compression stroke. Because balance of a vehicle body is kept by the compensation spring and meanwhile vibration of the vehicle body is alleviate, a shock absorber with a smaller damping coefficient can be adopted to keep driving performance of the vehicle.

The present invention has the beneficial effects that: through combination and compensation action of elastic elements in the suspension, performance requirements exceeding an active type suspension are realized; and the present invention is suitable for most of road and rail vehicles, and is particularly suitable for passenger vehicles with small load change, thereby not only reducing manufacturing cost, but also increasing controllability and comfort.

**DESCRIPTION OF DRAWINGS**

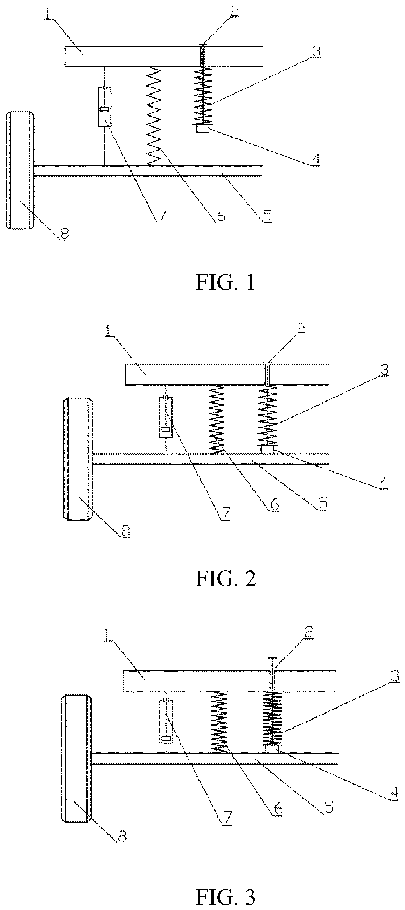

Fig. 1 is a schematic diagram of a combined spring compensation suspension when a suspension in embodiment 1 of the present invention is in a largest stroke; at this moment, a suspension load is less than a compensation interval; a free spring is in an extension state; and a compensation spring has no load.

Fig. 2 is a schematic diagram of a combined spring compensation suspension when a suspension in embodiment 1 of the present invention is in static deflection; at this moment, a suspension load is within a range of a compensation interval; a free spring bears part of load; a compensation spring bears part of load which is less than pre-tightening force; and at this moment, a suspension is in a balance static state during load.

Fig. 3 is a schematic diagram of a combined spring compensation suspension when a suspension in embodiment 1 of the present invention is in dynamic deflection; at this moment, a suspension load is greater than a compensation interval; a free spring is continuously compressed; a load borne by a compensation spring is greater than pre-tightening force and is continuously compressed; and at this moment, a suspension is in a large compression state.

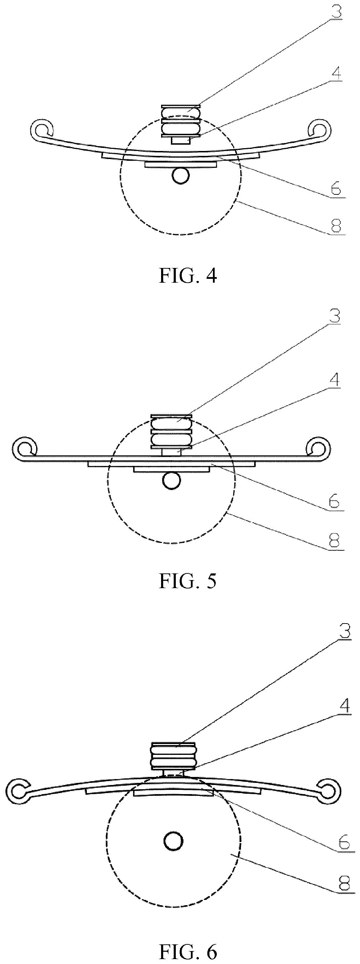

Fig. 4 is a schematic diagram of an inflating spring compensation suspension when a suspension in embodiment 2 of the present invention is in a largest stroke; at this moment, a suspension load is less than a compensation interval; a free spring is a leaf spring and is in a relaxed state; and a compensation spring is an inflating spring and has no load.

Fig. 5 is a schematic diagram of a gas spring compensation suspension when a suspension in embodiment 2 of the present invention is in static deflection; at this moment, a suspension load is within a range of a compensation interval; a free spring is a leaf spring and bears part of load; a compensation spring is a gas spring, bears part of load, but is not compressed; and at this moment, a suspension is in a balance static state during load.

Fig. 6 is a schematic diagram of a gas spring compensation suspension when a suspension in embodiment 2 of the present invention is in dynamic deflection; at this moment, a suspension load is greater than a compensation interval; a leaf spring is continuously compressed; a gas spring is continuously compressed; and at this moment, a suspension is in a large compression state.

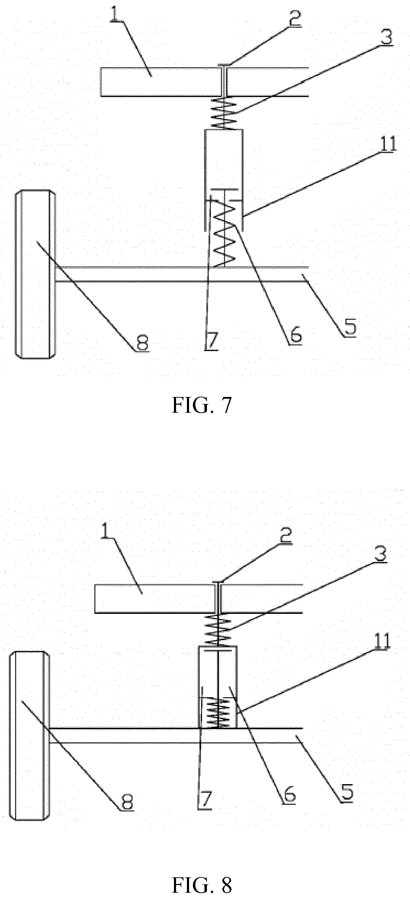

Fig. 7 is a schematic diagram of a free spring compensation suspension when a suspension in embodiment 3 of the present invention is in a largest stroke; the free spring and the compensation spring are designed in series; at this moment, a suspension load is less than a compensation interval; a free spring is in a relaxed state; and a compensation spring has no load.

Fig. 8 is a schematic diagram of a free spring compensation suspension when a suspension in embodiment 3 of the present invention is in static deflection; the free spring and the compensation spring are designed in series; at this moment, a suspension load is within a range of a compensation interval; the free spring is fully compressed; the compensation spring bears the entire load, but is not continuously compressed except for pre-tightening; and at this moment, a suspension is in a balance static state during load.

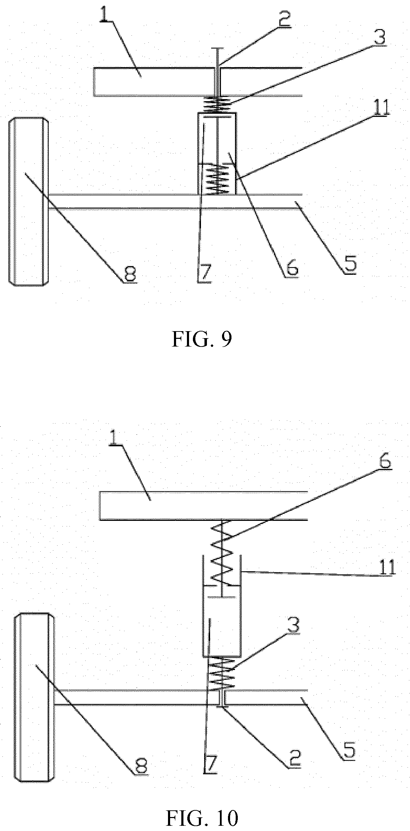

Fig. 9 is a schematic diagram of a free spring compensation suspension when a suspension in embodiment 3 of the present invention is in dynamic deflection; the free spring and the compensation spring are designed in series; at this moment, a suspension load is greater than a compensation interval; the free spring is in a largest compression state; the compensation spring is continuously compressed; and at this moment, a suspension is in a large compression state.

Fig. 10 is a schematic diagram of a free spring compensation suspension when a suspension in embodiment 4 of the present invention is in a largest stroke; the free spring and the compensation spring are designed in series; at this moment, a suspension load is less than a compensation interval; the free spring is in a relaxed state; and the compensation spring has no load.

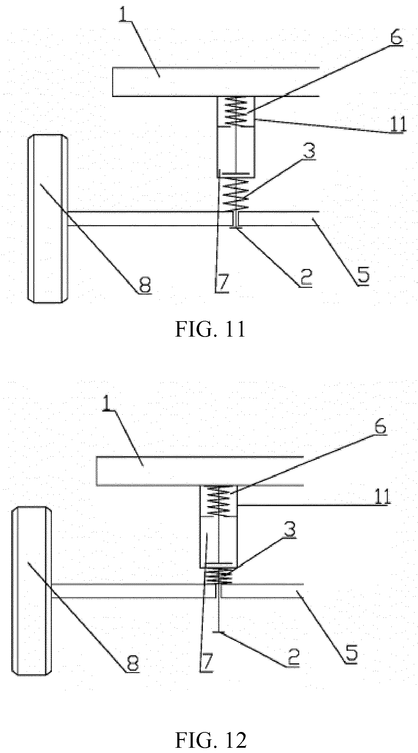

Fig. 11 is a schematic diagram of a free spring compensation suspension when a suspension in embodiment 4 of the present invention is in static deflection; the free spring and the compensation spring are designed in series; at this moment, a suspension load is within a range of a compensation interval; the free spring is fully compressed; the compensation spring bears the entire load, but is not continuously compressed except for pre-tightening force; and at this moment, a suspension is in a balance static state during load.

Fig. 12 is a schematic diagram of a free spring compensation suspension when a suspension in embodiment 4 of the present invention is in dynamic deflection; a free spring and a compensation spring are designed in series; at this moment, a suspension load is greater than a compensation interval; the free spring is in a largest compression state; the compensation spring is continuously compressed; and at this moment, a suspension is in a large compression state.

**DETAILED DESCRIPTION**

By referring to Fig. 1, Fig. 2 and Fig. 3, in embodiment 1, a vehicle frame (1), a compensation spring pre-tightening device (2), a compensation spring (3), a vibration isolation block (4), a guide mechanism (5), a free spring (6), a light damping shock absorber (7) and a wheel (8) are shown in the figures.

The suspension in the present invention comprises a vehicle frame 1, a compensation spring pre-tightening device 2, a compensation spring 3, a vibration isolation block 4, a guide mechanism 5, a free spring 6, a light damping shock absorber 7 and a wheel 8, wherein an elastic element is formed by combining the free spring 6 (the free spring 6 is a helical spring) and the compensation spring 3 (the compensation spring 3 is a helical spring) in parallel. When a vehicle is static or in a balance state, a load generated by a wheel to the suspension is borne jointly by the free spring 6 and the compensation spring 3. When the suspension load is at a compensation interval (the compensation interval is set to have a minimum value of A and a maximum value of B; the suspension load is $G_0$ when the vehicle is at idle load; the suspension load is G when the vehicle is loaded; $A < G_0 < G < B$; and the value is a designed minimum range which is generally exceeded in design), lengths of the free spring 6 and the compensation spring 3 are not changed and only the vibration isolation block 4 is deformed to a certain degree, i.e., a suspension stroke is only slightly changed along with the change of the load.

In the suspension, pre-tightening force F of the compensation spring forming the suspension is greater than $1.1(G-G_0)$, and elastic support force f provided by the free spring to the vehicle is less than $G_0$.

When the suspension load is less than $0.9G_0$, the free spring 6 of the suspension is elongated to bear the entire load; and the length of the compensation spring 3 is not changed and the compensation spring 3 does not bear the load.

When the suspension load is greater than $1.1(G-G_0)$, the free spring 6 of the suspension is continuously compressed to bear part of the load; and the compensation spring 3 is compressed to bear the rest load.

A most important feature of the technology is that a maximum stroke of the compensation spring 3 is limited by the pre-tightening device 2 and the compensation spring 3 is operated only within a range from static deflection to dynamic deflection of the suspension.

Nearby the static deflection of the suspension, if the idle load of the suspension is $G_0$ and the suspension load under load is G, then the support force f provided by the free spring 6 of the suspension and the pre-tightening force F of the compensation spring 3 need to simultaneously satisfy the following relationship:

[Formula 0001]

$$\begin{cases} f < G_0 < G < F + f \\ F + f \geq 1.1G \\ f \leq 0.9G_0 \end{cases}$$

Namely, the support force provided by the free spring 6 at this moment is less than a static load borne by the suspension, and part of the load is borne by the compensation spring 3 limited by the pre-tightening force. When the suspension load satisfies the above requirement, if the suspension load is changed within a certain range nearby a static deflection value, due to a compensation effect of the pre-tightening force of the compensation spring 3, the lengths of the free spring 6 and the compensation spring 3 are not changed. Even if a suspension stroke is changed, deformation is generated because the vibration isolation block is compressed, but deformation is very small. An overall effect is that the stroke change of the suspension is small. Within the load range, the stiffness of the suspension is high. When the change of the suspension load exceeds the range, two springs generate corresponding stroke changes and are enough to satisfy a driving requirement of the vehicle.

Through reasonable design, when the suspension load of the vehicle is changed within a certain range, the suspension stroke is not changed or only slightly changed. This is a characteristic most needed by the suspension of the vehicle. For example, when a wheel is impacted, the suspension is also impacted and the change of the load also generates a vibration impact on a vehicle body. The impact is transferred to other suspensions through the vehicle frame. However, since other suspensions are operated in the compensation interval, if the change of the load due to the impact is in the compensation interval of other suspensions, the strokes of other suspensions are not changed or slightly changed and the entire vehicle body still keeps a relative balance state. Similarly, if the vehicle is changed within the range of the compensation interval due to changes of speed, directions and loads, the change of the suspension load can also be compensated by the compensation spring 3 of the suspension. The suspension stroke still keeps a required stable state and the vehicle can keep good controllability and stability without affecting comfort of the vehicle.

By referring to Fig. 4, Fig. 5 and Fig. 6, in embodiment 2, the compensation spring (3), the vibration isolation block (4), the free spring (6) and the wheel (8) are shown.

In embodiment 2, an elastic element of the suspension of the vehicle in the present invention also comprises a free spring 6 and a compensation spring 3, wherein the compensation spring 3 is an inflating spring and the free spring 6 is a leaf spring.

The role of the compensation spring 3 in the present embodiment is the same as the role of the compensation spring 3 in embodiment 1. The role of the leaf spring is the same as the role of the free spring 6 in embodiment 1. A difference is that the inflating spring has characteristics of a pre-tightening spring without a need of adding a pre-tightening device. The leaf spring can also perform a role of guiding connection. The structure of the suspension can adopt a simpler design. Meanwhile, vibration isolation performance of the inflating spring is already excellent, and the added vibration isolation block 4 can further reduce noise. The leaf spring has a certain shock absorbing effect. If a requirement for shock absorbing is not high, a design of canceling the shock absorber can be adopted. In the suspension, pre-tightening force F of the inflating spring forming the suspension is greater than $1.1(G-G_0)$, and elastic support force f provided by the free spring to the vehicle is less than $G_0$.

By referring to Fig. 7, Fig. 8 and Fig. 9, in embodiment 3, a free spring (6), a light damping shock absorber (7), a guide cylinder (11), a compensation spring (3) and a wheel (8) are shown.

In embodiment 3, an elastic element of the suspension of the vehicle in the present invention also comprises a free spring 6 and a compensation spring 3, wherein the compensation spring 3 is a helical spring and the free spring 6 is a helical spring.

The role of the compensation spring 3 in the present embodiment is the same as the role of the compensation spring 3 in embodiment 1. The role of the free spring 6 is the same as the role of the free spring 6 in embodiment 1. A difference is that the compensation spring 3 and the free spring 6 are connected in series in the present embodiment. The guide cylinder 11 of the free spring 6 is connected to the light damping shock absorber 7, and not only performs a spring guiding effect, but also limits the stroke of the free spring 6, so that elastic support force provided by the free spring 6 satisfies f < $G_0$ and pre-tightening force F of the compensation spring is simultaneously designed to be greater than G.

Nearby the static deflection of the suspension, if the idle load of the suspension is $G_0$ and the suspension load under load is G, then the support force f provided by the free spring 6 of the suspension and the pre-tightening force F of the compensation spring 3 have the following relationship:

[Formula 0002]

$$\begin{cases} f < G_0 < G < F \\ F \geq 1.1G \\ f \leq 0.9G_0 \end{cases}$$

In the suspension, to increase controllability of the vehicle, pre-tightening force F of the compensation spring 3 forming the suspension is greater than 1.1G, and elastic support force f provided by the free spring 6 to the vehicle is less than $0.9G_0$.

By referring to Fig. 10, Fig. 11 and Fig. 12, in embodiment 4, a free spring (6), a light damping shock absorber (7), a guide cylinder (11), a compensation spring (3) and a wheel (8) are shown.

In embodiment 4, an elastic element of the suspension of the vehicle in the present invention also comprises a free spring 6 and a compensation spring 3, wherein the compensation spring 3 is a helical spring 3 and the free spring 6 is a helical spring 6.

The role of the compensation spring 3 in the present embodiment is the same as the role of the compensation spring 3 in embodiment 3. The role of the free spring 6 is the same as the role of the free spring 6 in embodiment 3. A difference is that the compensation spring 3 is at a lower part and the free spring 6 is at upper part in the present embodiment. The guide cylinder 11 of the free spring 6 is connected to the light damping shock absorber 7, and not only performs a spring guiding effect, but also limits that elastic support force provided by the free spring 6 satisfies $f < G_0$ and pre-tightening force F of the compensation spring 3 is simultaneously designed to be greater than G.

A specific structure is as follows: an upper end of the free spring 6 is connected with the vehicle frame 1, and a lower end is connected with an upper end of the light damping shock absorber 7; a guide cylinder 11 is connected to an upper end of an outer wall of the light damping shock absorber 7; an upper end of the compensation spring 3 is connected with a lower end of the light damping shock absorber 7; a lower end of the compensation spring 3 is connected with the guide mechanism 5; the compensation spring pre-tightening device 2 is installed at the connecting end; and the free spring 6, the light damping shock absorber 7 and the compensation spring 3 are successively connected between the vehicle frame 1 and the guide mechanism 5 to form series connection installation.

By summarizing the above description and embodiments, the design method and the structure of the suspension for the vehicle in the present invention are different from those of an existing suspension device for the vehicle. The suspension device of the present invention realizes a characteristic of mutual automatic compensation of a plurality of suspensions for the vehicle by means of combination and compensation of more than two elastic elements of the suspension, and provides a new design method for satisfying controllability and comfort requirements of the suspension.

Above embodiments are only used to illustrate design principles of the present invention. Practical design and structure may be greatly changed. For example, not only the range of the compensation interval needs to satisfy $A < G_0 < G < B$, but also a design that B-A is greater than $(G-G_0)50\%$ or more is made, and a design that B-A is greater than $G-G_0$ may be made for a special vehicle. In addition, the size of the load can be detected, and the size of B-A value is dynamically adjusted through an adjusting device, so as to satisfy higher comfort requirements. In summary, through the design of the compensation interval in the patent, an influence generated by a single suspension on the vehicle body can be compensated and corrected through other suspensions; finally, vibration of the vehicle body can be kept and reduced; and controllability and comfort can be simultaneously enhanced. The design and the device are realized by pre-tightening the compensation spring. The design and the structure for realizing an automatic suspension function of the suspension through spring pre-tightening are within a protection scope of the patent.

On one hand, the suspension adopting this design has good geometric deformation capability, has a capability of absorbing impacts from a pavement and effectively reduces or avoids the vibration of the vehicle body; and on the other hand, when the suspension is at static deflection, the suspension load has the automatic compensation function, so that when the vehicle is changed in speed, directions and loads, excessive change of the suspension stroke can be effectively reduced or avoided, thereby effectively solving a contradiction between riding comfort and control stability of the vehicle. The suspension has a use effect equaling or exceeding an electronically controlled active suspension on a general vehicle.

The above describes preferred embodiments and used technical principles of the present invention. For those skilled in the art, any equivalent transformation, simple replacement and other apparent changes based on technical solutions of the present invention without departing from spirits and scopes of the present invention belong to a protection scope of the present invention.

## Claims

1. A combined spring compensation suspension device, comprising a free spring, a compensation spring, a compensation spring pre-tightening device (2), a light damping shock absorber (7) and a guide mechanism (5); wherein the free spring, the compensation spring and the light damping shock absorber are arranged between a vehicle frame (1) and the guide mechanism (5); the compensation spring (3) is connected with the vehicle frame (1) or the guide mechanism (5); the compensation spring pre-tightening device (2) is installed at one end of the compensation spring; and the guide mechanism (5) is used for connecting a wheel and a vehicle body and providing positioning installation for the free spring (6), the compensation spring (3) and the light damping shock absorber (7).

2. The combined spring compensation suspension device according to claim 1, wherein an upper end of the free spring (6) is connected with the vehicle frame (1), and a lower end is connected with the guide mechanism (5); an upper end of the light damping shock absorber (7) is connected with the vehicle frame (1), and a lower end is connected with the guide mechanism (5); an upper end of the compensation spring (3) is connected with the vehicle frame (1), or a lower end is fixedly connected with the guide mechanism (5); the compensation spring pre-tightening device (2) is installed at the connecting end; a vibration isolation block is installed on an upper end or a lower end of the compensation spring (3); and the light damping shock absorber (7), the free spring (6) and the compensation spring (3) form parallel connection installation between the vehicle frame (1) and the guide mechanism (5).

3. The combined spring compensation suspension device according to claim 1, wherein a lower end of the free spring (6) is connected with the guide mechanism (5), and an upper end is connected with a lower end of the light damping shock absorber (7); a guide cylinder (11) is connected to a lower end of an outer wall of the light damping shock absorber (7); a lower end of the compensation spring (3) is connected with an upper end of the light damping shock absorber (7); an upper end of the compensation spring (3) is connected with the vehicle frame (1); the compensation spring pre-tightening device (2) is installed at the connecting end; and the compensation spring (3), the light damping shock absorber (7) and the free spring (6) are successively connected between the vehicle frame (1) and the guide mechanism (5) to form series connection installation.

4. The combined spring compensation suspension device according to claim 1, wherein an upper end of the free spring (6) is connected with the vehicle frame (1), and a lower end is connected with an upper end of the light damping shock absorber (7); a guide cylinder (11) is connected to an upper end of the outer wall of the light damping shock absorber (7); an upper end of the compensation spring (3) is connected with a lower end of the light damping shock absorber; a lower end of the compensation spring (3) is connected with the guide mechanism (5); the compensation spring pre-tightening device (2) is installed at the connecting end; and the free spring (6), the light damping shock absorber (7) and the compensation spring (3) are successively connected between the vehicle frame (1) and the guide mechanism (5) to form series connection installation.

5. The combined spring compensation suspension device according to claim 1, wherein a central lower end of the free spring (6) is connected with the guide mechanism (5), and upper ends on both sides are connected with the vehicle frame (1); the upper end of the compensation spring (3) is connected with the vehicle frame (1); a vibration isolation block (4) is installed at the lower end of compensation spring (3); and the vibration isolation block (4) and the free spring (6) are arranged to be centered.

6. The combined spring compensation suspension device according to claim 2, wherein when the free spring (6) and the compensation spring (3) are installed in parallel, a suspension load when a vehicle is at idle load is $G_0$; a suspension load when the vehicle is loaded is $G$; pre-tightening force $F$ of the compensation spring (3) forming the suspension is greater than $G-G_0$; and when the free spring (6) is nearby a static deflection value of the vehicle, elastic support force $f$ provided for the vehicle satisfies: $f < G_0$.

7. The combined spring compensation suspension device according to claim 3 and claim 4, wherein when the free spring (6) and the compensation spring (3) are installed in series, a suspension load when the vehicle is at idle load is $G_0$; a suspension load when the vehicle is loaded is $G$; pre-tightening force $F$ of the compensation spring (3) forming the suspension is greater than $G$; and when the free spring (6) is nearby a static deflection value of the vehicle, elastic support force provided for the vehicle satisfies: $f < G_0$.

8. The combined spring compensation suspension device according to claim 6, wherein when pre-tightening force $F$ of the compensation spring (3) forming the suspension is greater than $1.1(G-G_0)$ and the free spring (6) is nearby a static deflection value of the vehicle, elastic support force $f$ provided for the vehicle is less than $0.9G_0$.

9. The combined spring compensation suspension device according to claim 7, wherein pre-tightening force $F$ of the compensation spring (3) forming the suspension is greater than $1.1G$; and when the free spring (6) is nearby a static deflection value of the vehicle, elastic support force $f$ provided for the vehicle is less than $0.9G_0$.

**10.** The combined spring compensation suspension device according to claim 5 or claim 6, wherein a damping coefficient of the light damping shock absorber (7) is less than 0.25 in an extension stroke, and is less than 0.15 in a compression stroke.

FIG. 1

FIG. 2

FIG. 3

FIG. 4

FIG. 5

FIG. 6

FIG. 7

FIG. 8

FIG. 9

FIG. 10

FIG. 11

FIG. 12

EP 3 290 244 A1

# INTERNATIONAL SEARCH REPORT

| | International application No. |
|---|---|
| | **PCT/CN2016/078637** |

## A. CLASSIFICATION OF SUBJECT MATTER

B60G 15/06 (2006.01) i

According to International Patent Classification (IPC) or to both national classification and IPC

## B. FIELDS SEARCHED

Minimum documentation searched (classification system followed by classification symbols)

B60G; F16F

Documentation searched other than minimum documentation to the extent that such documents are included in the fields searched

Electronic data base consulted during the international search (name of data base and, where practicable, search terms used)

CNABS, VEN, CNKI: spring, pretight+, preload+, amortiz+, damp+, compensat+

## C. DOCUMENTS CONSIDERED TO BE RELEVANT

| Category* | Citation of document, with indication, where appropriate, of the relevant passages | Relevant to claim No. |
|---|---|---|
| PX | CN 204674327 U (XI, Yulin), 30 September 2015 (30.09.2015), claims 1-10 | 1-10 |
| PX | CN 104773045 A (XI, Yulin), 15 July 2015 (15.07.2015), claims 1-10 | 1-10 |
| A | CN 101395017 B (BAYERISCHE MOTOREN WERKE AKTIENGESELLSCHAFT), 13 April 2011 (13.04.2011), the whole document | 1-10 |
| A | WO 2010079823 A1 (MIZUNO, M. et al.), 15 July 2010 (15.07.2010), the whole document | 1-10 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 July 2016 (01.07.2016) | **14 July 2016 (14.07.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CHEN, Hua** Telephone No.: (86-10) **62085416** |

Form PCT/ISA/210 (second sheet) (July 2009)

16

## INTERNATIONAL SEARCH REPORT
### Information on patent family members

International application No.

**PCT/CN2016/078637**

| Patent Documents referred in the Report | Publication Date | Patent Family | Publication Date |
|---|---|---|---|
| CN 204674327 U | 30 September 2015 | None | |
| CN 104773045 A | 15 July 2015 | None | |
| CN 101395017 B | 13 April 2011 | EP 1993858 A1 | 26 November 2008 |
| | | US 2009000368 A1 | 01 January 2009 |
| | | WO 2007104393 A1 | 20 September 2007 |
| | | US 7748263 B2 | 06 July 2010 |
| | | CN 101395017 A | 25 March 2009 |
| | | EP 1993858 B1 | 13 January 2010 |
| | | DE 502007002619 D1 | 04 March 2010 |
| | | DE 102006011856 A1 | 20 September 2007 |
| WO 2010079823 A1 | 15 July 2010 | None | |

Form PCT/ISA/210 (patent family annex) (July 2009)

## REFERENCES CITED IN THE DESCRIPTION

**Patent documents cited in the description**

- CN 97181615